# EUROPEAN PATENT APPLICATION

(11) **EP 4 365 345 A1**
(43) Date of publication of application: **08.05.2024**
(21) Application number: 23200138.8
(22) Date of filing: 27.09.2023
(51) Int. Cl.: D04H 1/498, D04H 18/02, B29C 70/24, B29B 11/16, B29C 70/54

(54) **JOINING COMPOSITE PREFORM COMPONENTS VIA THROUGH THICKNESS REINFORCEMENT**

(30) Priority: 02.11.2022 US 202217979666
(71) Applicant: Rohr, Inc., Chula Vista, CA 91910-2098 (US)
(72) Inventor: WAUGH, Katherine E., San Diego (US); NEWTON, Kirk C., Vail (US); PUJAR, Vijay V., San Diego (US); KOROLY, Christopher C., Spring Valley (US)
(74) Representative: Dehns

(57) **Abstract**

A manufacturing method is provided. The manufacturing method arranges a first surface (102a) of a first composite preform component (102) to align with a first surface (104a) of a second composite preform component (104); attaches the first surface of the first composite preform component to the first surface of the second composite preform component to form a complex composite structure (100); and densifies the complex composite structure as one, complete complex composite structure.

## Description

### FIELD

The present disclosure relates generally to joining composite preform components.

### BACKGROUND

Shaped composite bodies are utilized in aerospace applications. Various systems and methods are known in the art for joining composite preform components.

### SUMMARY

According to various embodiments of the present disclosure, a manufacturing method is provided. The method includes arranging a first surface of a first composite preform component to align with a first surface of a second composite preform component; attaching the first surface of the first composite preform component to the first surface of the second composite preform component to form a complex composite structure; and densifying the complex composite structure as one, complete complex composite structure.

In various embodiments, attaching the first surface of the first composite preform component to the first surface of the second composite preform component utilizes through thickness reinforcement where fibers of the first surface of the first composite preform component are pushed into the first surface of the second composite preform component. In various embodiments, attaching the first surface of the first composite preform component to the first surface of the second composite preform component utilizes through thickness reinforcement where fibers of the first surface of the second composite preform component are pushed into the first surface of the first composite preform component.

In various embodiments, attaching the first surface of the first composite preform component to the first surface of the second composite preform component utilizes through thickness reinforcement where fibers of the first surface of the first composite preform component are pushed into the first surface of the second composite preform component and fibers of the first surface of the second composite preform component are pushed into the first surface of the first composite preform component. In various embodiments, attaching the first surface of the first composite preform component to the first surface of the second composite preform component utilizes a separate fiber ply and through thickness reinforcement where fibers of the separate fiber ply are pushed into the first surface of the first composite preform component and into the first surface of the second composite preform component.

In various embodiments, attaching the first surface of the first composite preform component to the first surface of the second composite preform component utilizes through thickness reinforcement to push an external thread or material into the first surface of the first composite preform component and into the first surface of the second composite preform component. In various embodiments, through thickness reinforcement includes needling, tufting, stitching, or z-pinning of the external thread or other material into the first surface of the first composite preform component and into the first surface of the second composite preform component.

In various embodiments, attaching the first surface of the first composite preform component to the first surface of the second composite preform component utilizes through thickness reinforcement via an end effector comprising a plurality of needles. In various embodiments, attaching the first surface of the first composite preform component to the first surface of the second composite preform component utilizes a base tool on which at least one of the first composite preform component or the second composite preform component rests while the attaching is performed. In various embodiments, attaching the first surface of the first composite preform component to the first surface of the second composite preform component utilizes a backing form to rigidize a shape of the complex composite structure while joining the first surface of the first composite preform component to the first surface of the second composite preform component.

Also disclosed herein is a system for forming a complex composite structure. The system includes an end effector comprising a plurality of needles, wherein the end effector is configured to: attach a first surface of a first composite preform component aligned with a first surface of a second composite preform component to form the complex composite structure, wherein, once the complex carbon composite structure is formed, the complex composite structure is densified as one, complete complex composite structure.

In various embodiments, the end effector attaches the first surface of the first composite preform component to the first surface of the second composite preform component utilizing through thickness reinforcement where fibers of the first surface of the first composite preform component are pushed into the first surface of the second composite preform component. In various embodiments, the end effector attaches the first surface of the first composite preform component to the first surface of the second composite preform component utilizing through thickness reinforcement where fibers of the first surface of the second composite preform component are pushed into the first surface of the first composite preform component.

In various embodiments, the end effector attaches the first surface of the first composite preform component to the first surface of the second composite preform component utilizing through thickness reinforcement where fibers of the first surface of the first composite preform component are pushed into the first surface of the second composite preform component and fibers of the first surface of the second composite preform component are pushed into the first surface of the first composite preform component. In various embodiments, the end effector attaches the first surface of the first composite preform component to the first surface of the second composite preform component utilizing a separate fiber ply and through thickness reinforcement where fibers of the separate fiber ply are pushed into the first surface of the first composite preform component and into the first surface of the second composite preform component.

In various embodiments, the end effector attaches the first surface of the first composite preform component to the first surface of the second composite preform component utilizing through thickness reinforcement to push an external thread or material into the first surface of the first composite preform component and into the first surface of the second composite preform component. In various embodiments, the through thickness reinforcement includes needling, tufting, stitching, or z-pinning the external thread or other material into the first surface of the first composite preform component and into the first surface of the second composite preform component.

In various embodiments, the end effector is coupled to at least one of a handheld through thickness reinforcement mechanism or a robotic arm. In various embodiments, the system further includes a base tool. In various embodiments, attaching the first surface of the first composite preform component to the first surface of the second composite preform component utilizes the base tool on which at least one of the first composite preform component or the second composite preform component rests while the attaching is performed. In various embodiments, the system further includes a backing form. In various embodiments, attaching the first surface of the first composite preform component to the first surface of the second composite preform component utilizes the backing form to rigidize a shape of the complex composite structure while joining the first surface of the first composite preform component to the first surface of the second composite preform component.

The present disclosure may include any one or more of the individual features disclosed above and/or below alone or in any combination thereof.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 illustrates a set of composite preform components to be joined together to form all or a portion of a composite structure, in accordance with various embodiments.
FIG. 2 illustrates a joining of a surface of the first composite preform component to a surface of a second composite preform component via through thickness reinforcement (TTR), in accordance with various embodiments.
FIG. 3 illustrates a joining of a surface of a first composite preform component to a surface of a second composite preform component through TTR using a separate fiber ply, in accordance with various embodiments.
FIG. 4 illustrates a joining of a surface of a first composite preform component to surface of a second composite preform component through TTR via external tufting, stitching, or z-pinning, among others, in accordance with various embodiments.
FIG. 5 illustrates a joining of multiple composite preform components through TTR to form more complex composite structures, in accordance with various embodiments.
FIG. 6 illustrates a base tool utilized to join multiple composite preform components through TTR, in accordance with various embodiments.
FIG. 7 illustrates a backing form utilized to join multiple composite preform components through TTR, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

Disclosed herein are systems and methods for joining composite preform components, hereinafter referred to as composite components, via through thickness reinforcement. The systems and methods relate to composite structures for applications have complex contours to meet aerodynamic and thermal requirements. Such composite structures may need to be constructed of several composite components of different geometries. Typically, composite structures made of multiple composite components require fastening or bonding together, which introduces stress concentrations and potential failure points in the design.

In order to address potential stress concentrations and potential failure points, the systems and methods disclosed herein, in various embodiments, provide for joining composite components prior to densification in order to mitigate the need for fastening or bonding. The proposed systems and methods disclosed herein join composite components via through thickness reinforcement (TTR), namely needling or stitching, among others. The joined composite structure may then be densified via Chemical Vapor Infiltration (CVI) or resin infiltration, among others, as a holistic part instead of individual components. The densification will rigidize the through-thickness reinforced joint of the composite structure.

In various embodiments, composite components, also referred to herein as shaped preforms, are joined together prior to densification without the use of fastening or bonding. In various embodiments, an end effector mechanism comprising a plurality of needles joins a set of composite components together using through thickness reinforcement that pushes fibers from a first composite component into a second composite component or pulls fibers from a second composite component into a first composite component. In various embodiments, the plurality of needles may be configured with forward and reverse barbs on the same needle. In various embodiments, the end effector may be configured to include an alternating array of needles wherein a needle with forward barbs alternates with a needle with reverse barbs. In various embodiments, the end effector maybe configured such that the volume fraction of needles with forward barbs varies with a volume fraction of needles with reverse barbs as a means of controlling the relative fraction of z-fiber reinforcement effected by the needles with forward barbs compared to the z-fiber reinforcement effected by the needles with reverse barb. In various embodiments, the end effector mechanism may be coupled to a handheld through thickness reinforcement mechanism or a robotic arm, among others. In various embodiments, the through thickness reinforcement may be performed on either flat or curved surfaces, as such the through thickness reinforcement is compatible with composite components of any geometry. In various embodiments, a separate ply of continuous or discontinuous fibers may be added to the first and second composite components and joined to the first and second composite components. In various embodiments, the through thickness reinforcement may be reinforced with fugitive/washable foam or with other perforated tooling. In various embodiments, a joining mechanism may be used to join the composite components together with an alternate fiber system. In various embodiments, the through thickness reinforcement may utilize needling, tufting, stitching, or z-pinning, among others, to join a set of composite components together. Accordingly, the systems and methods disclosed herein enable the creation of composite structures by joining composite components without the need for fasteners or bonding.

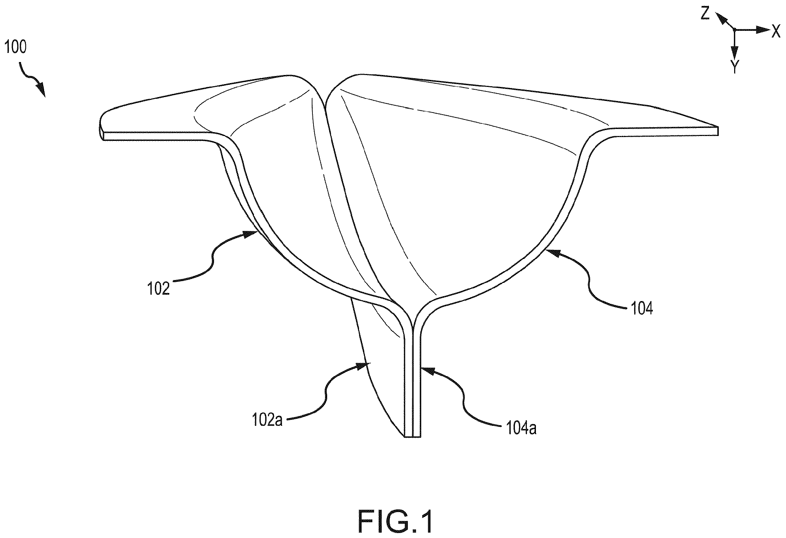

Thus, the disclosed systems and methods joining composite preform components via through thickness reinforcement is an improvement over the current composite preform components joining, in various embodiments, by enabling the generation of complex contour fibrous composite structures of multiple composite preform components via through thickness reinforcement that may include needling, tufting, stitching, or z-pinning, among others, and densification. Directly joining composite preform components via through thickness reinforcement aids mechanical properties in the joint of the composite preform components, without having to introduce stress concentrations or potential material system mismatches with fastening and bonding. This enables the generation of more complex composite structures in a shorter cycle time, as the holistic geometry may be densified as a single composite structure. Referring now to FIG. 1, in accordance with various embodiments, a set of composite preform components to be joined together to form all or a portion of a composite structure is illustrated. Composite structure 100 includes a first composite preform component 102 and a second composite preform component 104. In various embodiments, both of the first composite preform component 102 and the second composite preform component 104 may have a complex shape having portions formed in in a fist direction, i.e., in a x-direction, in a second direction, i.e., in a y-direction, and in a third direction, i.e., a z-direction, or any combination thereof. In various embodiments, parts of the first composite preform component 102 are joined to parts of the second composite preform component 104 for form an even more complex shape. For example, in various embodiments, surface 102a of the first composite preform component 102 may be joined to surface 104a of the second composite preform component 104 via through thickness reinforcement (TTR). In various embodiments, the joining of surface 102a to surface 104a may be reinforced from either side (surface 102a or surface 104a) of from both sides (surface 102a or surface 104a) so as to provide a robust joint between these two surfaces.

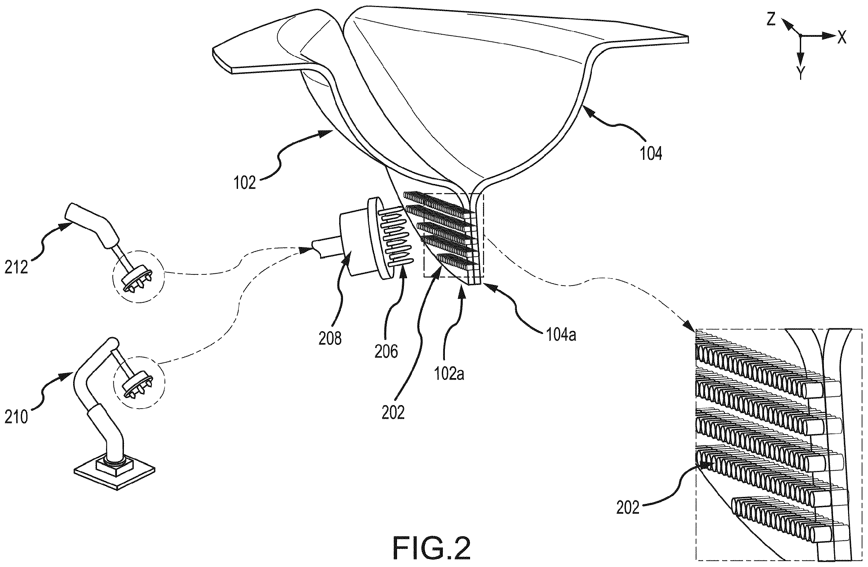

Turning to FIG. 2, in accordance with various embodiments, a joining of the surface 102a of the first composite preform component 102 to the surface 104a of the second composite preform component 104 via TTR is illustrated. In various embodiments, the TTR utilized to join surface 102a to surface 104a may push fibers 202, for example where TTR is performed from the surface 102a side, from the surface 102a of the first composite preform component 102 into the surface 104a of the second composite preform component 104. In various embodiments, as another example where TTR is performed from the surface 104a side, fibers from the surface 104a of the second composite preform component 104 are pushed into the surface 102a of the first composite preform component 102. In various embodiments, as yet another example where TTR is performed from the surface 102a side and from the surface 104a side, fibers 202 from the surface 102a of the first composite preform component 102 are pushed into the surface 104a of the second composite preform component 104 and fibers from the surface 104a of the second composite preform component 104 are pushed into the surface 102a of the first composite preform component 102.

In various embodiments, the fibers 202 of surface 102a and/or fibers of surface 104a may be pushed, either normal or at some angle. i.e., between 0 and 45 degrees, between 5 and 20 degrees, or between 10 and 15 degrees, among others, to the surfaces 102a, 104a to-be-joined, from the first composite preform component 102 and/or the second composite preform component 104. In various embodiments, the fibers 202 of surface 102a and/or fibers of surface 104a may be pushed via needles 206 coupled to an end effector 208. In various embodiments, the end effector 208, and needles 206 coupled thereto, may be controlled via a robotic arm TTR end effector 210 of via a human using a handheld TTR end effector 212, among others. In various embodiments, the end effector 208 is compatible with composite preforms/surfaces of any geometry thereby allowing the fibers 202 from the surface 102a of the first composite preform component 102 to penetrate into the surface 104a of the second composite preform component 104 and/or fibers from the surface 104a of the second composite preform component 104 are pushed into the surface 102a of the first composite preform component 102 such that the fibers 202 of surface 102a and/or fibers of surface 104a penetrate at any density, depth, or angle into the associated component.

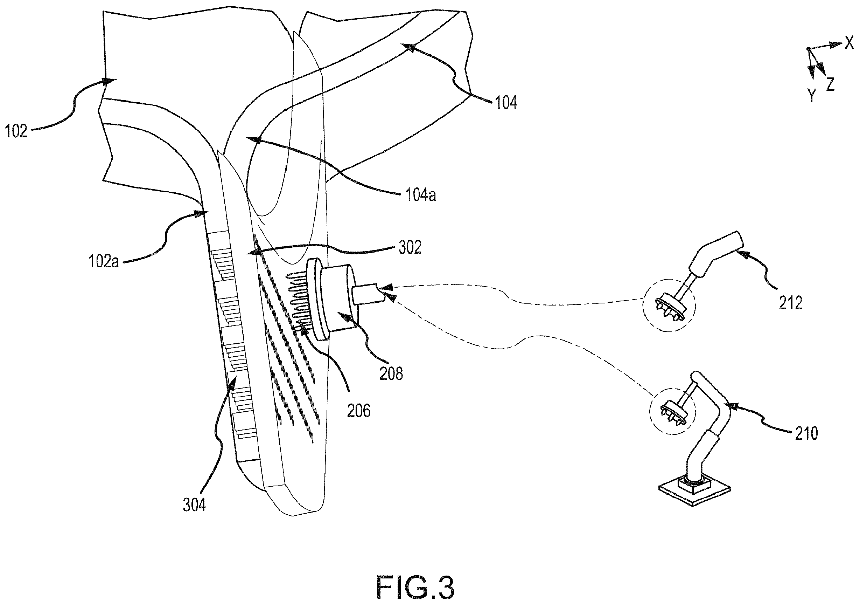

Turning to FIG. 3, in accordance with various embodiments, a joining of the surface 102a of the first composite preform component 102 to the surface 104a of the second composite preform component 104 through TTR using a separate fiber ply 302 is illustrated. In various embodiments, a separate fiber ply 302 may be placed on top of either surface 102a of the first composite preform component 102 or surface 104a of the second composite preform component 104, such that the separate fiber ply 302 is a sacrificial fiber and only the fibers 304 of the separate fiber ply 302 are pushed into the surface 102a and the surface 104a and not fibers 202 of surface 102a of the first composite preform component 102 or fibers of surface 104a of the second composite preform component 104.

In various embodiments, the fibers 304 of the separate fiber ply 302 may be pushed either normal or at some angle into the surfaces 102a, 104a to-be-joined, from the separate fiber ply 302. In various embodiments, the fibers 304 may be pushed via needles 206 coupled to an end effector 208. In various embodiments, the end effector 208, and needles 206 coupled thereto, may be controlled via a robotic arm TTR end effector 210 of via a human using a handheld TTR end effector 212, among others. In various embodiments, the end effector 208 is compatible with composite preforms/surfaces of any geometry thereby allowing the fibers 304 from the separate fiber ply 302 to penetrate into the surface 102a of the first composite preform component 102 and into the surface 104a of the second composite preform component 104 such that the fibers 304 penetrate at any density, depth, or angle into the associated component.

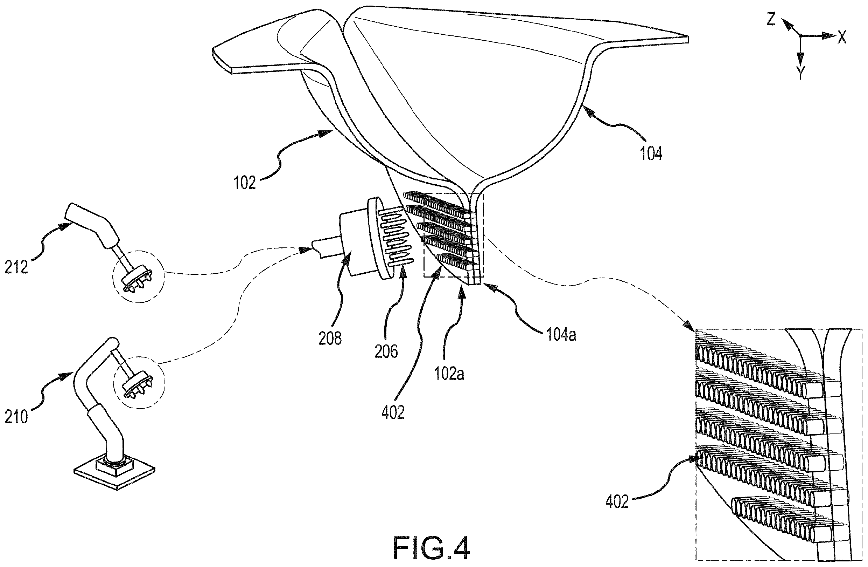

Turning to FIG. 4, in accordance with various embodiments, a joining of the surface 102a of the first composite preform component 102 to the surface 104a of the second composite preform component 104 through TTR via external needling, tufting, stitching, or z-pinning, among others is illustrated. In various embodiments, the TTR utilized to join surface 102a to surface 104a may be implemented that needles, tufts, stitches, or z-pins an external thread or other material 402 into the surface 102a and the surface 104a and not fibers 202 of surface 102a of the first composite preform component 102 or fibers of surface 104a of the second composite preform component 104.

In various embodiments, the external thread or other material 402 may be needled, tufted, stitched, or z-pined, either normal or at some angle into the surfaces 102a, 104a to-be-joined, from the separate fiber ply 302. In various embodiments, the external thread or other material 402 may be needled, tufted, stitched, or z-pined via needles 206 coupled to an end effector 208. In various embodiments, the end effector 208, and needles 206 coupled thereto, may be controlled via a robotic arm TTR end effector 210 of via a human using a handheld TTR end effector 212, among others. In various embodiments, the end effector 208 is compatible with composite preforms/surfaces of any geometry thereby allowing the external thread or other material 402 to penetrate into the surface 102a of the first composite preform component 102 and into the surface 104a of the second composite preform component 104 such that the fibers 304 penetrate at any density, depth, or angle into the associated component.

It is noted that any of the aforementioned embodiments may be used concurrently. That is, in various embodiments, the through thickness reinforcement of fibers of one surface of a first composite preform component into a second composite preform component, as illustrated in FIG. 2, may be combined with either or both of the through thickness reinforcement of a fibers of a separate fiber ply into a first composite preform component and a second composite preform component, as illustrated in FIG. 3, or the joining of a surface of a first composite preform component to a surface of a second composite preform component through TTR via external needling, tufting, stitching, or z-pinning, as illustrated in FIG. 4. In various embodiments, the through thickness reinforcement of a fibers of a separate fiber ply into a first a first composite preform component and a second composite preform component, as illustrated in FIG. 3, may be combined with either or both of the through thickness reinforcement of fibers of one surface of a first composite preform component into a second composite preform component, as illustrated in FIG. 2, or the joining of a surface of a first composite preform component to a surface of a second composite preform component through TTR via external needling, tufting, stitching, or z-pinning, as illustrated in FIG. 4. In various embodiments, the joining of a surface of a first composite preform component to a surface of a second composite preform component through TTR via external needling, tufting, stitching, or z-pinning, as illustrated in FIG. 4, may be combined with either or both of the through thickness reinforcement of fibers of one surface of a first composite preform component into a second composite preform component, as illustrated in FIG. 2, or the through thickness reinforcement of a fibers of a separate fiber ply into a first a first composite preform component and a second composite preform component, as illustrated in FIG. 3.

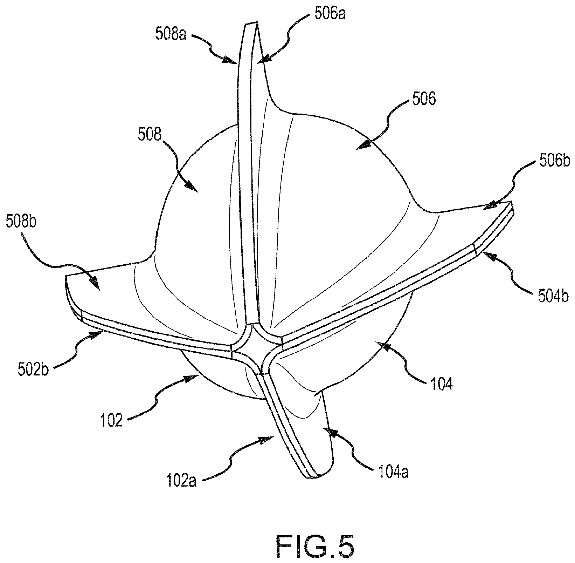

Turning to FIG. 5, in accordance with various embodiments, a joining of multiple composite preform components through TTR to form more complex composite structures is illustrated. In various embodiments, the TTR may push fibers of one surface of a first composite preform component into a second composite preform component, as illustrated in FIG. 2, may be through thickness reinforcement of a fibers of a separate fiber ply into a first a first composite preform component and a second composite preform component, as illustrated in FIG. 3, or may be joining of a surface of a first composite preform component to a surface of a second composite preform component through TTR via external needling, tufting, stitching, or z-pinning, as illustrated in FIG. 4. Regardless of the method utilized to join the various surfaces to one another, in various embodiments, multiple sections may be joined together to create more complex structures. As is illustrated in FIG. 5, surface 102a of the first composite preform component 102 is joined to the surface 104a of the second composite preform component 104; surface 504b of the second composite preform component 104 is joined to surface 506b of a third composite preform component 506; surface 506a of the third composite preform component 506 is joined to surface 508a of a fourth composite preform component 508; and surface 508b of the fourth composite preform component 508 is joined to surface 502b of the first composite preform component 102.

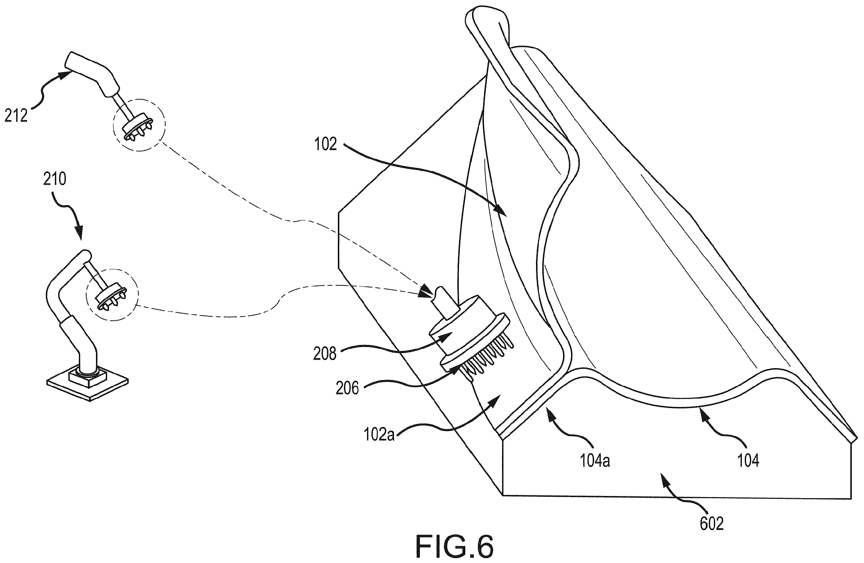

Turning to FIG. 6, in accordance with various embodiments, a base tool utilized to join multiple composite preform components through TTR is illustrated. In various embodiments, whether using through thickness reinforcement of fibers of one surface of a first composite preform component into a second composite preform component, as illustrated in FIG. 2, through thickness reinforcement of a fibers of a separate fiber ply into a first a first composite preform component and a second composite preform component, as illustrated in FIG. 3, or joining of a surface of a first composite preform component to a surface of a second composite preform component through TTR via external needling, tufting, stitching, or z-pinning, as illustrated in FIG. 4, the composite preform components 102, 104 may be needled on a concave base tool 602, with or without additional fixturing to old the composite preform components 102, 104 in place. In various embodiments, the second composite preform component 104 may be placed upon a concave base tool 602 that that has an associated shape to the of the second composite preform component 104. The first composite preform component 102 may then be placed on top of the second composite preform component such that surface 102a of the first composite preform component 102 aligns with the surface 104a of the second composite preform component 104. The concave base tool 602 is configured so as to include perforations or have a foam backing that allows the needles 206 coupled to end effector 208 to pass through the first composite preform component 102 and the second composite preform component 104. In various embodiments, the end effector 208, and needles 206 coupled thereto, may be controlled via a robotic arm TTR end effector 210 of via a human using a handheld TTR end effector 212, among others. In various embodiments, the end effector 208 is compatible with composite preforms/surfaces of any geometry thereby allowing fibers and/or external thread or other material to penetrate into the surface 102a of the first composite preform component 102 and into the surface 104a of the second composite preform component 104.

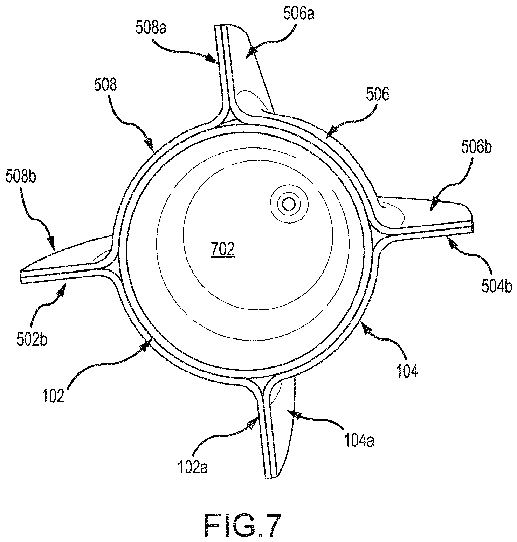

Turning to FIG. 7, in accordance with various embodiments, a backing form utilized to join multiple composite preform components through TTR is illustrated. In various embodiments, whether using through thickness reinforcement of fibers of one surface of a first composite preform component into a second composite preform component, as illustrated in FIG. 2, through thickness reinforcement of a fibers of a separate fiber ply into a first a first composite preform component and a second composite preform component, as illustrated in FIG. 3, or joining of a surface of a first composite preform component to a surface of a second composite preform component through TTR via external needling, tufting, stitching, or z-pinning, as illustrated in FIG. 4, the composite preform components 102, 104, 506, and 508 may be needled utilizing backing form 702. In various embodiments, the backing form 702 may be made of material such as high resilience foam, closed cell foam, or charcoal foam, among others, and is provided to hold and/or rigidize the shape of the complex composite structure while joining the composite preform components 102, 104, 506, and 508 together. In various embodiments, after surface 102a of the first composite preform component 102 is joined to the surface 104a of the second composite preform component 104; surface 504b of the second composite preform component 104 is joined to surface 506b of a third composite preform component 506; surface 506a of the third composite preform component 506 is joined to surface 508a of a fourth composite preform component 508; and surface 508b of the fourth composite preform component 508 is joined to surface 502b of the first composite preform component 102, the backing form 702 may either be washed or burned away in further processing.

It is noted that, once a complex composite structure is created by joining one or more composite preform components utilizing one or more of the embodiments described in FIGS. 1-7, the complex composite structure may then be densified as one complete complex composite structure.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about," or "approximately" as used herein represent an amount close to the stated amount that still performs a desired function or achieves a desired result. For example, the term "substantially," "about," or "approximately" may refer to an amount that is within 10% of, within 5% of, within 1% of, within 0.1 % of, and within 0.01% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A manufacturing method, comprising:
arranging a first surface of a first composite preform component to align with a first surface of a second composite preform component;
attaching the first surface of the first composite preform component to the first surface of the second composite preform component to form a complex composite structure; and
densifying the complex composite structure as one, complete complex composite structure.

2. The manufacturing method of claim 1, wherein attaching the first surface of the first composite preform component to the first surface of the second composite preform component utilizes through thickness reinforcement where fibers of the first surface of the first composite preform component are either pushed into or pulled through the first surface of the second composite preform component.

3. The manufacturing method of claim 1, wherein attaching the first surface of the first composite preform component to the first surface of the second composite preform component utilizes through thickness reinforcement where fibers of the first surface of the second composite preform component are either pushed into or pulled through the first surface of the first composite preform component.

4. The manufacturing method of claim 1, wherein attaching the first surface of the first composite preform component to the first surface of the second composite preform component utilizes through thickness reinforcement where fibers of the first surface of the first composite preform component are either pushed into or pulled through the first surface of the second composite preform component and fibers of the first surface of the second composite preform component are either pushed into or pulled through the first surface of the first composite preform component.

5. The manufacturing method of any preceding claim, wherein attaching the first surface of the first composite preform component to the first surface of the second composite preform component utilizes a separate fiber ply and through thickness reinforcement where fibers of the separate fiber ply are either pushed into or pulled through the first surface of the first composite preform component and into the first surface of the second composite preform component.

6. The manufacturing method of any preceding claim, wherein attaching the first surface of the first composite preform component to the first surface of the second composite preform component utilizes through thickness reinforcement to either push or pull an external thread or material into the first surface of the first composite preform component and into the first surface of the second composite preform component.

7. The manufacturing method of claim 6, wherein the through thickness reinforcement includes one or more of tufting, stitching, or z-pinning the external thread or other material into the first surface of the first composite preform component and into the first surface of the second composite preform component.

8. The manufacturing method of any preceding claim, wherein attaching the first surface of the first composite preform component to the first surface of the second composite preform component utilizes through thickness reinforcement via an end effector comprising a plurality of needles.

9. The manufacturing method of any preceding claim, wherein attaching the first surface of the first composite preform component to the first surface of the second composite preform component utilizes a base tool on which at least one of the first composite preform component or the second composite preform component rests while the attaching is performed.

10. The manufacturing method of any preceding claim, wherein attaching the first surface of the first composite preform component to the first surface of the second composite preform component utilizes a backing form to rigidize a shape of the complex composite structure while joining the first surface of the first composite preform component to the first surface of the second composite preform component.

11. A system for forming a complex composite structure, the system comprising:
an end effector comprising a plurality of needles, wherein the end effector is configured to:
attach a first surface of a first composite preform component aligned with a first surface of a second composite preform component to form the complex composite structure, wherein, once the complex composite structure is formed, the complex composite structure is densified as one, complete complex composite structure.

12. The system of claim 11, wherein the end effector attaches the first surface of the first composite preform component to the first surface of the second composite preform component utilizing;
through thickness reinforcement where fibers of the first surface of the first composite preform component are either pushed into or pulled through the first surface of the second composite preform component; or
through thickness reinforcement where fibers of the first surface of the second composite preform component are either pushed into or pulled through the first surface of the first composite preform component; or
through thickness reinforcement where fibers of the first surface of the first composite preform component are either pushed into or pulled through the first surface of the second composite preform component and fibers of the first surface of the second composite preform component are either pushed into or pulled through the first surface of the first composite preform component; and/or
a separate fiber ply and through thickness reinforcement where fibers of the separate fiber ply are either pushed into or pulled through the first surface of the first composite preform component and into the first surface of the second composite preform component.

13. The system of claim 11 or 12, wherein the end effector attaches the first surface of the first composite preform component to the first surface of the second composite preform component utilizing through thickness reinforcement to either push or pull an external thread or material into the first surface of the first composite preform component and into the first surface of the second composite preform component.,
wherein, optionally, through thickness reinforcement includes one or more of needling, tufting, stitching, or z-pinning the external thread or other material into the first surface of the first composite preform component and into the first surface of the second composite preform component.

14. The system of any of claims 11 to 13, the end effector is coupled to at least one of a handheld through thickness reinforcement mechanism or a robotic arm.

15. The system of any of claims 11-14, further comprising:
a base tool, wherein attaching the first surface of the first composite preform component to the first surface of the second composite preform component utilizes the base tool on which at least one of the first composite preform component or the second composite preform component rests while the attaching is performed; and/or
a backing form, wherein attaching the first surface of the first composite preform component to the first surface of the second composite preform component utilizes the backing form to rigidize a shape of the complex composite structure while joining the first surface of the first composite preform component to the first surface of the second composite preform component.
